(19) Europäisches Patentamt
European Patent Office
Office européen des brevets

(11) EP 0 729 212 B1

(12) **FASCICULE DE BREVET EUROPEEN**

(45) Date de publication et mention
de la délivrance du brevet:
**09.06.1999 Bulletin 1999/23**

(51) Int Cl.⁶: **H02J 7/10**

(21) Numéro de dépôt: **96400382.6**

(22) Date de dépôt: **23.02.1996**

(54) **Procédé de charge d'accumulateur au lithium à anode de carbone**

Verfahren zum Laden einer mit einer Kohlenstoffanode versehenen Lithiumbatterie

Method for charging a lithium battery provided with a carbon anode

(84) Etats contractants désignés:
**DE ES FR GB SE**

(30) Priorité: **27.02.1995 FR 9502251**

(43) Date de publication de la demande:
**28.08.1996 Bulletin 1996/35**

(73) Titulaire: **ALCATEL**
**75008 Paris (FR)**

(72) Inventeurs:
• **Andrieu, Xavier**
**91220 Bretigny sur Orge (FR)**

• **Poignant, Philippe**
**92130 Issy les Moulineaux (FR)**
• **Sonnet, Antoine**
**92340 Bourg la Reine (FR)**

(74) Mandataire: **Schaub, Bernard et al**
**c/o ALCATEL ALSTHOM,**
**Département de Propriété Industrielle,**
**30, avenue Kléber**
**75116 Paris (FR)**

(56) Documents cités:
GB-A- 2 248 735     JP-A- 6 014 473
US-A- 4 667 143

## Description

La présente invention concerne un procédé de charge destiné à charger un accumulateur au lithium comportant une anode de carbone, ou plusieurs de ces accumulateurs éventuellement associés en batterie. Elle s'étend à un dispositif pour la mise en oeuvre de ce procédé.

Ces accumulateurs comportaient jusqu'à présent une anode en lithium métallique dont le fonctionnement par dissolution/recristallisation avec formation de dendrites limite les densités de courant applicables et la durée de vie de l'accumulateur. Les accumulateurs récemment développés possèdent une anode comprenant un matériau carboné dans lequel s'absorbent et se désorbent au cours de la charge puis de la décharge les ions lithium. La cathode de ces accumulateurs comprend un matériau d'insertion, généralement un oxyde métallique (bioxyde de manganèse, oxyde de cobalt oxyde de nickel, etc...) auquel on additionne un matériau conducteur, habituellement du carbone.

Le procédé de charge connu (voir par exemple US-A-5 408 170) comporte deux étapes principales. Dans une première étape, on impose à l'accumulateur une intensité constante. La tension de l'accumulateur augmente alors jusqu'à atteindre une tension fixée qui est la tension de fin de charge caractéristique du type d'accumulateur. En pratique, le taux de charge à l'issue de la première étape est de l'ordre de 50% à 70%.

Puis dans une seconde étape, on maintient la tension à sa valeur à la fin de la première étape pendant le temps nécessaire pour obtenir le taux de charge désirée qui est généralement de l'ordre de 75% à 95%. L'intensité décroît jusqu'à atteindre une valeur très faible.

Dans certains cas, il est nécessaire de réduire le temps de charge de ces accumulateurs, notamment lors de leur incorporation dans des appareils portables pour lesquels la possibilité d'une charge très rapide est réclamée par les utilisateurs.

La valeur de l'intensité constante de la première étape ne peut être augmentée qu'au détriment du rendement de charge; ce qui signifie qu'avec la même quantité d'électricité fournie, le taux de charge sera moins élevé à la fin de la première étape. Lors de la deuxième étape, le taux de charge maximum qu'il est possible d'atteindre est limité par l'impédance de l'accumulateur. Il est donc inutile d'augmenter la durée de la deuxième étape. Dans ces conditions connues, la diminution de la durée de la charge conduit toujours à une charge partielle.

Une solution a été proposée dans le brevet US-5,204,611 qui consiste à asservir la tension de fin de charge à la tension mesurée à courant nul. La mise en oeuvre de cette méthode est complexe car elle nécessite d'associer des moyens de mémorisation et d'asservissement, de plus elle n'est pas applicable à toute les technologies d'accumulateur, comme par exemple les accumulateurs spiralés présentant une impédance à forte composante inductive.

La présente invention a donc pour but de proposer un procédé de charge de ces accumulateurs plus rapide que les procédés connus et conduisant à un taux de charge du même ordre de grandeur.

L'invention a également pour but de proposer un procédé de charge rapide de ces accumulateurs sans risque de les dégrader et réduire leur durée de vie.

L'invention a encore pour but de proposer un procédé de charge rapide de ces accumulateurs dont la mise en oeuvre est simple et qui convienne à toute les technologies.

L'objet de la présente invention est un procédé de charge d'accumulateur au lithium à anode de carbone ayant pour caractéristiques une tension de fin de charge et une résistance ohmique, procédé comportant une première étape où on impose une intensité qui est constante et on laisse croître la tension dudit accumulateur jusqu'à atteindre une tension de référence, puis une seconde étape où ladite tension de référence est imposée et ladite intensité décroît, caractérisé en ce que, à chaque instant, ladite tension de référence est égale à la somme de ladite tension de fin de charge et du produit de ladite intensité par ladite résistance ohmique.

La résistance ohmique mentionnée ici se définit comme la valeur de la composante réelle de l'impédance de l'accumulateur mesurée à haute fréquence. Elle contient notamment les résistances dues aux collecteurs de courant (conducteurs électroniques) et aux séparateurs (conducteurs ioniques). A basse fréquence, la résistance interne contient la résistance ohmique mais aussi des résistances de diffusion et de transfert. Dans le cas d'un accumulateur au lithium à anode de carbone, la résistance ohmique ne varie pas. Si la résistance ohmique devait présenter une très faible variation, c'est sa valeur minimum qui serait utilisée comme valeur de compensation.

Le procédé selon l'invention est utilisé pour charger un accumulateur de résistance ohmique R dont la tension de fin de charge est $U_f$. La première étape est menée à une intensité constante $I_c$. On se fixe la tension de référence $U_r$ déterminant la fin de la première étape par la formule suivante:

$$U_r = U_f + (I_c \times R)$$

La deuxième étape consiste à imposer une tension de référence $U_i$ entraînant la décroissance de l'intensité $I_i$. La tension $U_i$ varie à chaque instant en fonction de l'évolution de $I_i$; elle est donnée par le calcul:

$$U_i = U_f + (I_i \times R)$$

où i représente le numéro d'ordre de la mesure effectuée et varie de 1 à N, nombre total de mesures.

Une seule mesure suffit à déterminer la tension de référence de la première étape puisque le courant est constant. La valeur de ladite tension de référence est calculée en permanence soit par une boucle d'asservissement analogique, soit par un logiciel.

Par le procédé selon la présente invention, on parvient ainsi à une réduction du temps total de charge qui peut atteindre 30 % par rapport à celui du procédé connu tout en maintenant le taux de charge à une valeur élevée.

Le dispositif utilisé pour effectuer la charge de l'accumulateur par le procédé selon l'invention comporte:

- une alimentation en tension limitée en courant,
- des moyens de mémorisation de ladite tension de fin de charge et de ladite résistance ohmique,
- des moyens de mesure de ladite intensité et de ladite tension dudit accumulateur,
- des moyens de calcul de ladite tension de référence en effectuant la somme de ladite tension de fin de charge et dudit produit de ladite intensité par ladite résistance ohmique,
- des moyens de comparaison de ladite tension mesurée à ladite tension de référence,
- des moyens d'imposition de ladite tension de référence audit accumulateur.

L'utilisateur indique la tension de fin de charge et la résistance ohmique caractéristiques de l'accumulateur à charger qui sont mémorisées par le dispositif. Le courant passant dans le circuit de charge est mesurée. Le produit du courant mesuré par la résistance ohmique R de l'accumulateur est calculé et ajouté à la tension de fin de charge $U_f$ de l'accumulateur. On obtient alors la valeur de la tension de référence $U_i$ pour le courant considéré $I_i$ tel que:

$$U_i = U_f + (I_i \times R)$$

La tension réelle mesurée de l'accumulateur est comparée à la valeur de la tension de référence calculée pour l'intensité constante imposée lors de la première étape. La tension réelle de l'accumulateur augmente jusqu'à atteindre la valeur de la tension de référence, ce qui détermine l'arrêt de la charge.

Pendant la seconde étape, la tension de référence est recalculée périodiquement à partir de la mesure du courant instantané, et la valeur obtenue est imposée à l'accumulateur.

D'autres caractéristiques et avantages de la présente invention apparaîtront à la lecture de l'exemple suivant de réalisation, donné bien entendu à titre illustratif mais nullement limitatif, en référence au dessin annexé sur lequel:

- la figure 1 est une représentation schématique d'un dispositif de charge selon le procédé de l'invention.
- la figure 2 représente l'évolution de l'intensité dans le circuitpendant la charge,
- la figure 3 représente l'évolution de la tension de l'accumulateur pendant la charge,
- la figure 4 montre le gain de temps obtenu par le procédé de l'invention par rapport au procédé connu, en fonction du taux de charge atteint pour deux régimes de charge différents,

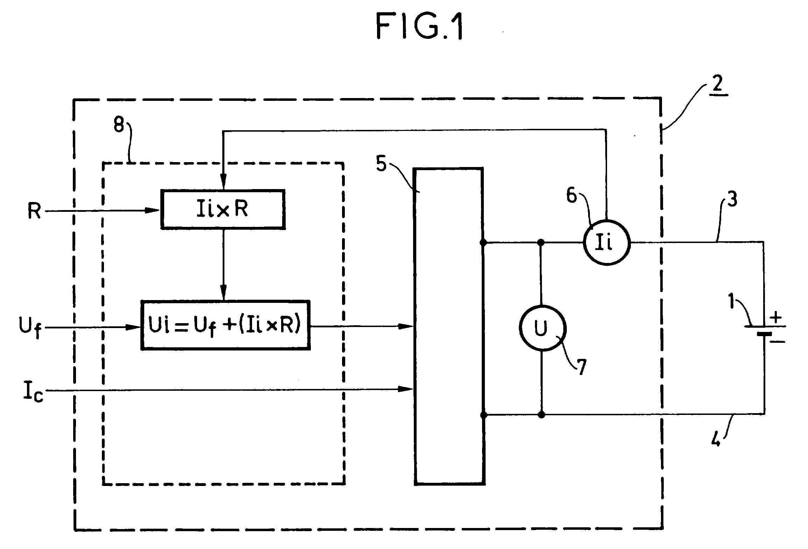

La figure 1 représente schématiquement un dispositif de charge selon l'invention. L'accumulateur à charger 1 est relié au dispositif de charge 2 par deux câbles de charge 3 et 4 reliés respectivement aux bornes positive et négative de l'accumulateur 1. Le dispositif 2 comporte une alimentation en tension limitée en courant 5. Les moyens de mesure se composent d'un ampèremètre 6 pour la mesure de l'intensité, et d'un voltmètre 7 pour la mesure de la tension aux bornes de l'accumulateur. Les moyens de mémorisation, de calcul et de comparaison sont rassemblés dans une unité de traitement de données 8 qui règle la valeur de l'intensité ou de la tension de charge conformément aux valeurs déterminées par le calcul.

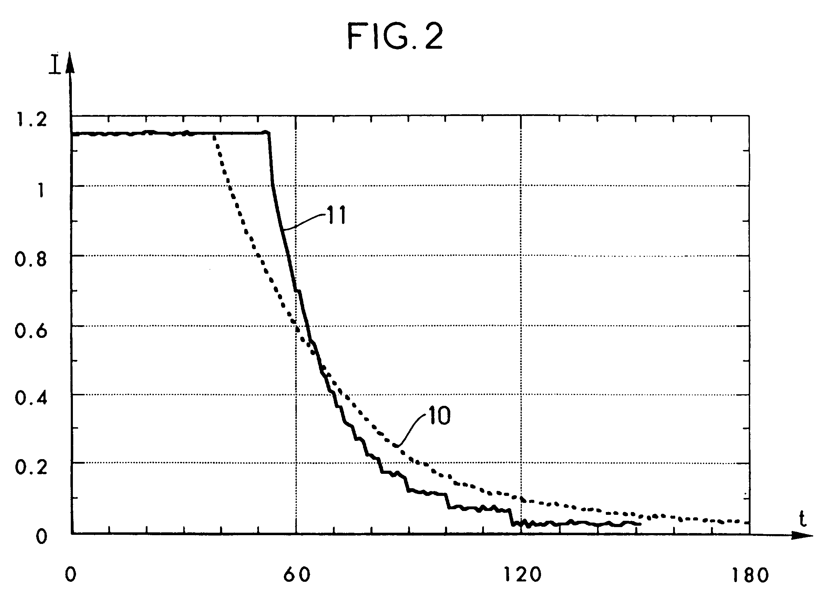

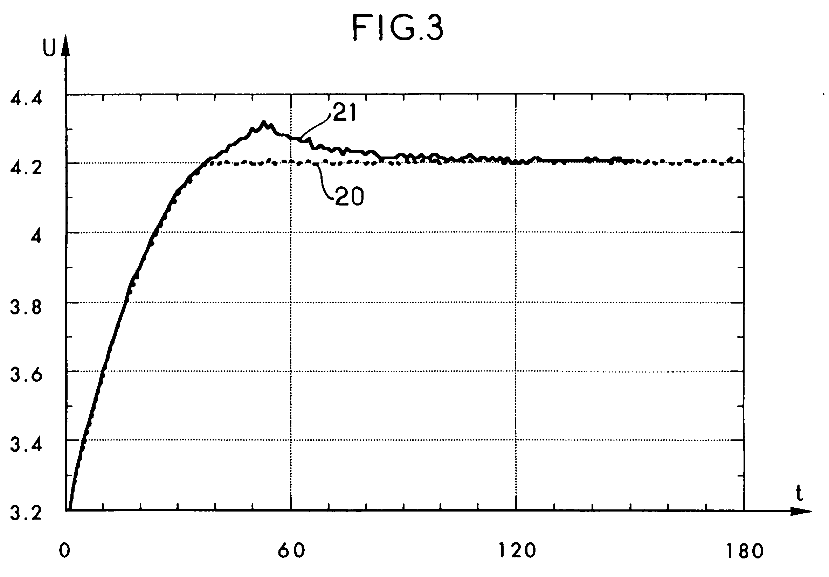

La figure 2 représente l'évolution de l'intensité I en Ampère en fonction du temps de charge t en minutes, et la figure 3 celle de la tension U en Volts d'un accumulateur au lithium à anode de carbone en fonction du temps t. L'accumulateur à charger a une capacité nominale de 1Ah, et possède une tension de fin de charge de 4,2 Volts et une résistance ohmique en série de 100 milliohms. La résistance ohmique peut par exemple être mesurée avant le début de la charge par la méthode connue de la coupure de courant.

D'une part la charge est effectuée selon le procédé connu avec une première étape à une intensité (courbe 10) constante d'environ 1A. La tension (courbe 20) augmente de la valeur initiale de 3,2V à la valeur de la tension de fin de charge de 4,2V. Le taux de charge de l'accumulateur atteint 60% à la fin de la première étape. Puis on maintient dans la seconde étape la tension à une valeur constante de 4,2V. L'intensité décroît jusqu'à une valeur finale très faible. La durée de la deuxième étape est de 2 heures environ. Un taux de charge final de l'ordre de 80% est donc obtenu en 3 heures.

D'autre part, selon le procédé de l'invention, on réalise comme précédemment la charge à une intensité (courbe 11) constante de 1A. La tension (courbe 21) augmente jusqu'à ce qu'elle atteigne la valeur de la tension de fin de charge de 4,2V. On poursuit alors la première étape jusqu'à une tension de référence que l'on a déterminée. Cette tension de référence est calculée par la somme de la tension de fin de charge (4,2V) et du produit de l'intensité (1A) par la résistance ohmique (0,1Ω) de l'accumulateur, soit 4,3V.

Au cours de la deuxième étape, on impose une tension de référence qui doit à chaque instant être égale à la somme de la tension de fin de de charge (4,2V) et du produit de l'intensité instantanée par la résistance ohmique (0,1Ω). L'intensité décroît alors plus rapidement que dans le procédé connu jusqu'à devenir très faible. La tension de référence imposée à l'accumulateur n'est plus constante puisqu'elle varie avec l'intensité La durée de la deuxième période est ainsi notablement diminuée et le taux de charge finalest toujours d'environ 80%. La charge est ainsi obtenue en 2,5 heure, soit un gain de temps de 17%.

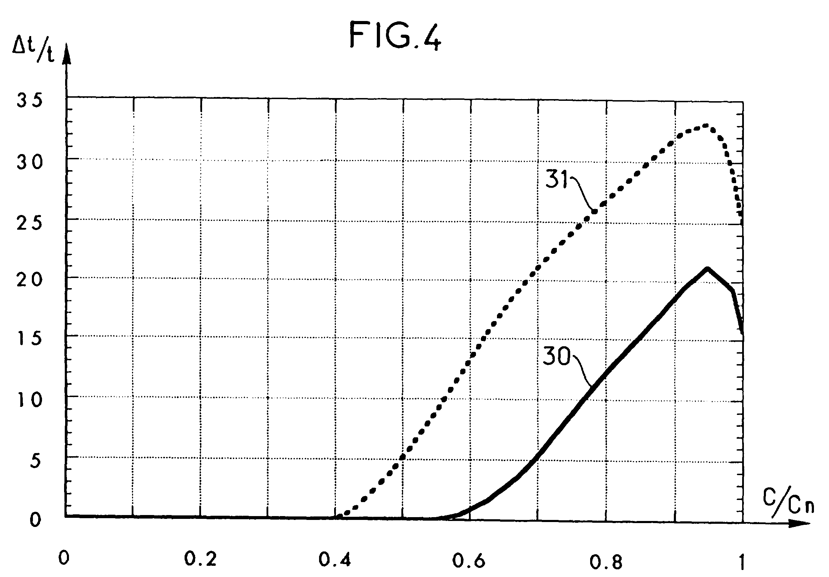

La figure 4 montre le rapport Δt/t entre la réduction du temps de charge Δt obtenu par le procédé de l'invention et le temps t nécessaire pour charger un accumulateur par le procédé connu, en fonction du taux de charge C/C$_n$ (rapport de la capacité réellement chargée C à la capacité nominale théorique C$_n$ de l'accumulateur). Un accumulateur, de capacité 1Ah, a été chargé par le procédé selon l'invention à un régime de charge de 1A (courbe 30). Le gain s'élève rapidement pour des taux de charge croissant et le gain de temps maximum de 21% est atteint pour un taux de charge de l'ordre de 95% de la capacité nominale.

Pour un régime de charge plus rapide de 1,5A (courbe 31), le gain de temps maximum de 33% est atteint pour un taux de charge de l'ordre de 95% de la capacité nominale.

Bien entendu la présente invention n'est pas limitée au mode de réalisation décrit et représenté, mais elle est susceptible de nombreuses variantes accessibles à l'homme de l'art sans que l'on ne s'écarte du cadre des revendications. En particulier, on pourra sans sortir du cadre de l'invention remplacer tout moyen par un moyen équivalent.

**Revendications**

1. Procédé de charge d'un accumulateur au lithium à anode de carbone ayant pour caractéristiques une tension de fin de charge et une résistance ohmique, procédé comportant une première étape où on impose une intensité qui est constante et on laisse croître la tension dudit accumulateur jusqu'à atteindre une tension de référence, puis une seconde étape où ladite tension de référence est imposée et ladite intensité décroît, caractérisé en ce que, à chaque instant, ladite tension de référence est égale à la somme de ladite tension de fin de charge et du produit de ladite intensité par ladite résistance ohmique.

2. Procédé de charge selon la revendication 1, dans lequel ladite tension de référence est calculée et et réajustée de manière permanente au cours de ladite seconde étape.

3. Dispositif de charge par le procédé selon l'une des revendications précédente, comportant:

- une alimentation en tension et courant,
- des moyens de mémorisation de ladite tension de fin de charge et de ladite résistance ohmique,
- des moyens de mesure de ladite intensité et de ladite tension dudit accumulateur,
- des moyens de calcul de ladite tension de référence en effectuant la somme de ladite tension de fin de charge et dudit produit de ladite intensité par ladite résistance ohmique,
- des moyens de comparaison de ladite tension mesurée à ladite tension de référence,
- des moyens d'imposition de ladite tension de référence audit accumulateur.

4. Dispositif de charge suivant la revendication 3, dans lequel lesdits moyens de calcul, lesdits moyens de comparaison et lesdits moyens d'imposition sont susceptibles de calculer et de réajuster de manière permanente ladite tension de référence au cours de ladite seconde étape.

**Patentansprüche**

1. Verfahren zum Laden eines Lithium-Akkumulators mit Kohlenstoffanode, der als Charakteristika eine Lade-Endspannung und einen Ohm'schen Widerstand hat, wobei das Verfahren einen ersten Schritt, wo eine konstante Stromstärke aufgeprägt wird und die Spannung des Akkumulators wachsen gelassen wird, bis sie eine Referenzspannung erreicht, und dann einen zweiten Schritt hat, wo die Referenzspannung aufgeprägt wird und die Stromstärke abnimmt, dadurch gekennzeichnet, daß zu jedem Zeitpunkt die Referenzspannung gleich der Summe der Lade-Endspannung und des Produktes aus der Stromstärke und dem Ohm'schen Widerstand ist .

2. Ladeverfahren nach Anspruch 1, bei dem die Referenzspannung im Laufe des zweiten Schrittes ständig berechnet und nachangepaßt wird.

3. Vorrichtung zum Laden nach dem Verfahren nach einem der vorhergehenden Ansprüche, mit:

- einer Strom- und Spannungsversorgung,
- Mittel zum Speichern der Lade-Endspannung und des Ohm'schen Widerstandes,
- Mittel zum Messen der Stromstärke und der Spannung des Akkumulators,
- Mittel zum Berechnen der Referenzspannung durch Bilden der Summe der Lade-Endspannung und des Produktes aus der Stromstärke und dem Ohm'schen Widerstand,
- Mittel zum Vergleichen der gemessenen Spannung mit der Referenzspannung,
- Mittel zum Aufprägen der Referenzspannung auf den Akkumulator.

4. Ladevorrichtung nach Anspruch 3, bei der die Mittel zum Berechnen, die Mittel zum Vergleichen und die Mittel zum Aufprägen in der Lage sind, die Referenzspannung im Laufe des zweiten Schrittes ständig zu berechnen und neu anzupassen.

## Claims

1. A method of charging a carbon-anode lithium storage cell having as characteristics an end-of-charge voltage and an ohmic resistance, which method comprises a first step in which a constant current is imposed and during which the voltage across said storage cell is allowed to increase until it reaches a reference value, and then a second step in which said reference voltage is imposed and said current decreases, the method being characterized in that, at each instant, said reference voltage is equal to the sum of said end-of-charge voltage plus the product of said current multiplied by said ohmic resistance.

2. A charging method according to claim 1, in which said reference voltage is calculated and is readjusted on a continuing basis during said second step.

3. Apparatus for charging by implementing the method according to claim 1 or 2, the apparatus comprising:

   a supply of voltage and current;
   means for memorizing said end-of-charge voltage and said ohmic resistance;
   means for measuring said current and said voltage of said storage cell;
   calculation means for calculating said reference voltage by summing said end-of-charge voltage and said product of said current multiplied by said ohmic resistance;
   comparator means for comparing said measured voltage with said reference voltage; and
   voltage-imposing means for imposing said reference voltage on said storage cell.

4. Means for charging according to claim 3, in which said calculation means, said comparator means, and said voltage imposition means are suitable for calculating and readjusting said reference voltage on a continuing basis during said second step.

# FIG.1

EP 0 729 212 B1

# FIG. 2

EP 0 729 212 B1

# FIG.3

FIG.4

EP 0 729 212 B1